# EUROPEAN PATENT SPECIFICATION

(11) **EP 4 437 043 B1**
(45) Date of publication and mention of the grant of the patent: **15.10.2025**
(21) Application number: 22818308.3
(22) Date of filing: 16.11.2022
(51) Int. Cl.: C08K 7/14, C08K 3/22, C08L 77/06, C08L 71/00, C08L 71/08, C08L 81/06

(54) **COMPOSITIONS COMPRISING POLYARYLENE(ETHER)SULFONES**
ZUSAMMENSETZUNGEN MIT POLYARYLEN(ETHER)SULFONEN
COMPOSITIONS COMPRENANT DES SULFONES DE POLYARYLÈNE(ÉTHER)

(30) Priority: 23.11.2021 EP 21209795
(43) Date of publication of application: 02.10.2024
(73) Proprietor: BASF SE, 67056 Ludwigshafen am Rhein (DE)
(72) Inventor: WEBER, Martin, 67056 Ludwigshafen (DE); ROTH, Michael, 67056 Ludwigshafen (DE); HENNENBERGER, Florian, 67056 Ludwigshafen (DE); STRAUCH, Joachim, 67056 Ludwigshafen (DE); MALETZKO, Christian, 67122 Altrip (DE)
(74) Representative: BASF IP Association
(86) International application number: PCT/EP2022/082065
(87) International publication number: WO 2023/094231

(56) References cited:
- EP-A1- 2 256 167
- WO-A1-97/04018
- DE-A1- 102019 214 712
- DE-A1- 3 617 501

## Description

The present invention relates to compositions comprising polyarylene(ether)sulfones and polyamides.

Polyarylene(ether)sulfones belong to the group of high temperature resistant polymers showing high heat resistance, excellent mechanical performance and inherent flame retardancy (E.M. Koch, H.-M. Walter, Kunststoffe 80 (1990) 1146; E. Döring, Kunststoffe 80, (1990) 1149, N. In-chaurondo-Nehm, Kunststoffe 2008 190). Polyarylene(ether)sulfones are amorphous polymers and susceptible to organic solvents. Furthermore, due to the high content of aromatic units, the insulation properties, like the comparative tracking index (CTI) are low compared to other thermoplastic materials.

DE 10 2019 214712 A1 relates to a polyamide composition, a process for producing the same and a molded article. The polyamide composition according to the first aspect of this invention contains an aliphatic polyamide, a semi-aromatic polyamide having a diamine unit and a dicarboxylic acid unit, at least one phosphinate, a diphosphinate and a condensate thereof and a polymer having an oxygen index of 27% or more and having an aromatic group in the main chain.

DE 36 17 501 A1 discloses thermoplastic molding compositions containing as essential components A) 2 to 97.9 wt.% of a polyamide, B) 2 to 97.9 wt.% of a polyarylethersulfone, C) 0.1 to 30 wt.% of a polymeric component containing hydroxyl groups and in addition D) 0 to 50 wt.% of an impact modifier rubber and E) 0 to 60 wt.% reinforcing fillers.

To overcome the mentioned deficiencies of polyarylene(ether)sulfones, compositions based on polyarylene(ether)sulfones and polyamides might be interesting, since polyamides offer good resistance to many solvents and also high CTI values. Since polyarylene(ether)sulfones and polyamides are not miscible, the binary blends suffer from poor mechanical properties (M. Weber in "Polymer Blends and Alloys" G. Shonaike, G.P. Simon (Eds.), Marcel Dekker Inc. 1999, p. 275).

Several approaches are known to compatibilize polyarylene(ether)sulfones and polyamides. Polyhydroxy ethers are known to improve the compatibility of polyarylene(ether)sulfone/polyamide-blends (DE 3617501). Furthermore, reactive blending between anhydride-functionalized polyarylene(ether)sulfones and polyamides is described in several patents and papers (C.-L-Myers, ANTEC 1, 1420 (1992); EP 613916, WO 97/04018; W. Kaufhold, H. Schnablegger, R.T. Kumpf, H. Pielarzik, R.E. Cohen, Acta Polym. 46, 307 (1995)). None of the described approaches has fully satisfied the desired requirements, hence there is a continuous need for new compounds with improved performance.

In EP 0477757A2 polymer blends based on polyarylene(ether)sulfones and aliphatic-aromatic polyamides are described. From EP 2594610A1 laminates based on different polyarylene(ether)sulfones and polyamides are known, which show improved CTI-values. Flame retardancy tests for the laminates show good flame retardancy behavior.

The problem underlying the present invention, was to address the deficiencies of known polyarylene(ether)sulfones / polyamide blends and to provide material or compositions that are suitable for injection molding and showing improved CTI values and good flame retardancy.

This problem was solved by the compositions of the present invention. In particular, the present invention provides a composition comprising
A) 20 to 80 % by weight of at least one polyarylene(ether)sulfone having at most 0.05 % by weight of phenolic end groups;
B) 10 to 50 % by weight of at least one semi-aromatic polyamide;
C) 4 to 15 % by weight of at least one aluminum phosphinate;
D) 0.01 to 2 % by weight of at least one acid scavenger;
E) 0 to 10 % by weight of at least one compatibilizer;
F) 0 to 60 % by weight of at least one fibrous or particulate filler;
G) 0 to 30 % by weight of at least one impact modifier; and
H) 0 to 40 % by weight of at least one auxiliary;
wherein the sum of % by weight of the components of the composition is 100 % by weight.

Herein, "at least one" may in general mean one or two or more, such as three or four or five or more, wherein more may mean a plurality or an uncountable. For instance, it may mean one or a mixture of two or more. If used in connection with chemical compounds "at least one" is meant in the sense that one or two or more chemical compounds differing in their chemical constitution, that is chemical nature, are described.

Furthermore, herein "polymer" may mean homopolymer or copolymer or a mixture thereof. The person skilled in the art appreciates that any polymer, may it be a homopolymer or a copolymer by nature typically is a mixture of polymeric individuals differing in their constitution such as chain length, degree of branching or nature of endgroups. Thus, in the following "at least one" as prefix to a polymer means that different types of polymers may be encompassed whereby each type may have the difference in constitution addressed above.

The inventive compositions comprise 20 to 80 % by weight of at least one polyarylene(ether)sulfone having at most 0.05 % by weight of phenolic end groups.

Polyarylene(ether)sulfones are a class of polymers known to a person skilled in the art. In principle, for component A) a polyarylene(ether)sulfone of any structure is encompassed by the present invention provided that the polyarylene(ether)sulfone comprises at most 0.05 % by weight of phenolic end groups. In the following more detailed description it is always a precondition that the polyarylene(ether)sulfone comprises at most 0.05 % by weight of phenolic end groups if it is used as component A).

It may be preferred that the polyarylene(ether)sulfone is composed of units of the general formula II 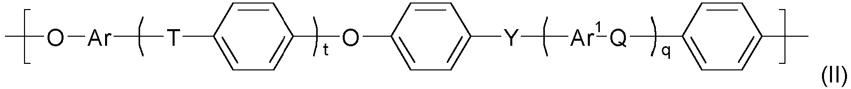 wherein the definitions of the symbols t, q, Q, T, Y, Ar and Ar¹ are as follows:
- t, q: independently of one another 0, 1, 2 or 3;
- Q, T, Y: independently of one another a chemical bond or a group selected from -O-, -S-, -SO₂-, S=O, C=O, -N=N- and -CR^{a}R^{b}-, wherein R^{a} and R^{b} independently of one another are a hydrogen atom, (C₁-C₁₂)alkyl, (C₁-C₁₂)alkoxy, (C₃-C₁₂)cycloalkyl or a (C₆-C₁₈)aryl group, and wherein at least one of Q, T, and Y is present and is -SO₂-; and
- Ar and Ar¹: independently of one another (C₆-C₁₈)arylene.

If, within the abovementioned preconditions, Q, T or Y is a chemical bond, this means that the adjacent group on the left-hand side and the adjacent group on the right-hand side are present with direct linkage to one another via a chemical bond.

According to one preferred embodiment, t and q are independently 0 or 1.

According to one preferred embodiment, Q, T, and Y in formula II are independently selected from a chemical bond, -O-, -SO₂- and -CR^{a}R^{b}-, with the proviso that at least one of Q, T, and Y is present and is -SO₂-. Furthermore, it may be preferred, if R^{a} and R^{b} are, independently of one another, hydrogen or (C₁-C₄)alkyl.

In -CR^{a}R^{b}-, R^{a} and R^{b} are preferably independently selected from hydrogen, (C₁-C₁₂)alkyl, (C₁-C₁₂)alkoxy and (C₆-C₁₈)aryl.

(C₁-C₁₂)alkyl refers to linear or branched saturated hydrocarbon groups having from 1 to 12 carbon atoms. The following moieties are particularly encompassed: (C₁-C₆)alkyl, e.g. methyl, ethyl, n-propyl, isopropyl, n-butyl, sec-butyl, 2- or 3-methylpentyl, as well as (C₇-C₁₂)alkyl, e.g. unbranched heptyl, octyl, nonyl, decyl, undecyl, lauryl, and the singly branched or multibranched analogs thereof.

The term " C₁-C₁₂-alkoxy" refers to a linear or branched alkyl group having 1 to 12 carbon atoms which is bonded via an oxygen, at any position in the alkyl group, e.g. methoxy, ethoxy, n-propoxy, 1-methylethoxy, butoxy, 1-methyl-propoxy, 2-methylpropoxy or 1,1-dimethylethoxy.

(C₃-C₁₂)cycloalkyl refers to monocyclic saturated hydrocarbon radicals having 3 to 12 carbon ring members and particularly comprises (C₃-C₈)cycloalkyl, e.g. cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, -propyl, -butyl, -pentyl, -hexyl, cyclohexylmethyl, -dimethyl, and -trimethyl.

Ar and Ar¹ are independently of one another a (C₆-C₁₈)-arylene group. According to a specific embodiment, Ar¹ is an unsubstituted (C₆-C₁₂)arylene group.

It may be preferred that Ar and Ar¹ are independently selected from phenylene, bisphenylene and naphthylene groups, and from arylene groups that derive from anthracene, from phenanthrene, or from naphthacene. For examples, Ar and Ar¹ are independently selected from 1,2-phenylene, 1,3-phenylene, 1,4-phenylene, 1,6-naphthylene, 1,7-naphthylene, 2,6-naphthylene and 2,7-naphthylene, 2,7-dihydroxynaphthylene and 4,4'-bisphenylene.

In particular, it may be preferred that Ar and Ar¹ are independently selected from phenylene and naphthylene groups, such as independently selected from 1,2-phenylene, 1,3-phenylene, 1,4-phenylene, 1,6-naphthylene, 1,7-naphthylene, 2,6-naphthylene and 2,7-naphthylene, more specifically independently selected from 1,4-phenylene, 1,3-phenylene and naphthylene. Furthermore, according to another embodiment of the present invention Ar and Ar¹ are independently selected from arylene groups that derive from anthracene, from phenanthrene, or from naphthacene. According to still a further embodiment, Ar and Ar¹ are independently selected from 2,7-dihydroxynaphthylene and 4,4'-bisphenylene.

It may be preferred if the polyarylene(ether)sulfone according to component A) comprises at least one of the following repeat units IIa to IIo:

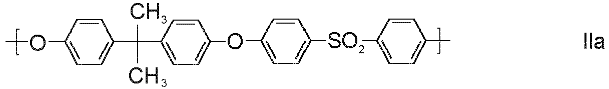

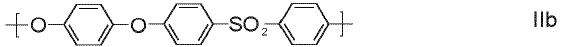

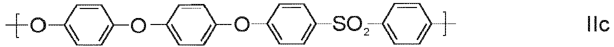

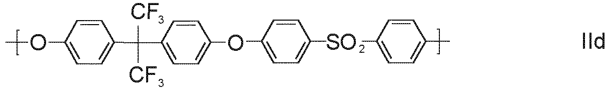

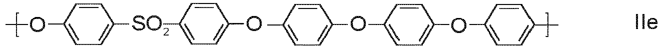

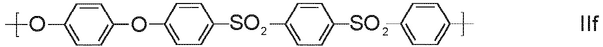

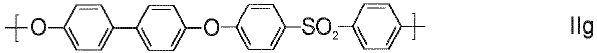

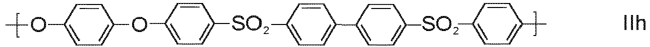

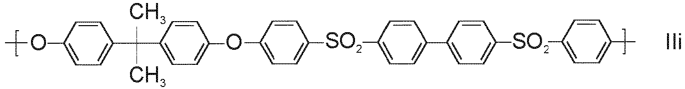

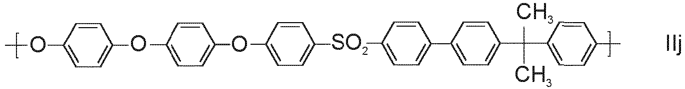

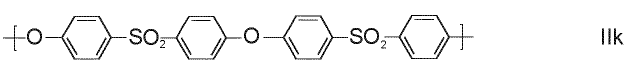

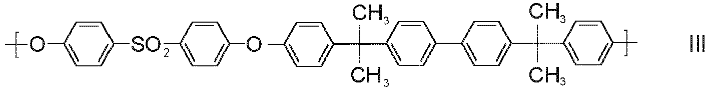

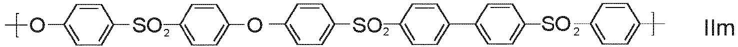

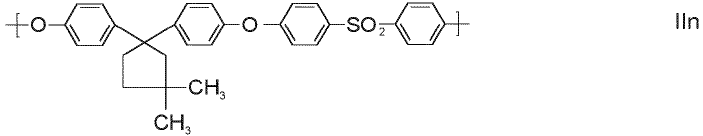

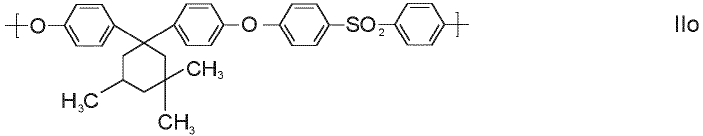

Other repeat units, in addition to the units Ila to Ilo that may preferably be present, are those in which one or more 1,4-phenylene units deriving from hydroquinone have been replaced by 1,3-phenylene units deriving from resorcinol, or by naphthylene units deriving from dihydroxynaphthalene.

Units of the general formula II that are particularly preferred are the units Ila, Ilg, and/or Ilk. According to a specific embodiment, it is particularly preferred that the component A) polyarylene(ether)sulfone is in essence composed of one type of unit of the general formula II, whereby said one type may particularly be selected from IIa, IIg, and IIk.

According to a preferred embodiment, the component A) polyarylene(ether)sulfone is composed of repeat units where Ar is 1,4-phenylene, t is 1, q is 0, T is a chemical bond, and Y is SO₂. This polyarylene(ether)sulfone is also termed polyphenylene sulfone (PPSU) (formula Ilg).

According to a further preferred embodiment, the component A) polyarylene(ether)sulfone is composed of repeat units where Ar is 1,4-phenylene, t is 1, q is 0, T is C(CH₃)₂, and Y is SO₂. This polyarylene(ether)sulfone is also termed polysulfone (PSU) (formula Ila).

According to still a further preferred embodiment, the component A) polyarylene(ether)sulfone is composed of repeat units where Ar is 1,4-phenylene, t is 1, q is 0, T and Y are SO₂. This polyarylene(ether)sulfone is also termed polyether sulfone (PESU) (formula Ilk).

For the purposes of the present disclosure, abbreviations such as PPSU, PESU, and PSU are in accordance with DIN EN ISO 1043-1:2001.

The amount of component A) present in the inventive composition is 20 to 80 % by weight. According to a preferred embodiment, the amount of component A) is 20 to 75 % by weight, in particular 20 to 70 % by weight, more specifically 20 to 65% by weight, and even more specifically 20 to 60% by weight of the composition. More specifically, this embodiment uses 20 to 55 % by weight, more specifically 20 to 50 % by weight, and even more specifically 20 to 45% by weight of component A). In a further preferred embodiment, the amount of component A) is 25 to 75 % by weight, in particular 25 to 70 % by weight, more specifically 25 to 65% by weight, and even more specifically 25 to 60% by weight of the composition. A very specific embodiment of the invention uses 25 to 55 % by weight, more specifically 25 to 50 % by weight, and even more specifically 25 to 45% by weight of component A). According to another preferred embodiment, the amount of component A) is 30 to 75 % by weight, in particular 30 to 70 % by weight, more specifically 30 to 65% by weight, and even more specifically 30 to 60% by weight of the composition. A very specific embodiment of the invention uses 30 to 55 % by weight, more specifically 30 to 50 % by weight, and even more specifically 30 to 45% by weight of component A). In certain cases amounts of 30 to 40 %, more specifically 30 to 35 % by weight of component A) may be preferred.

The polyarylene(ether)sulfone of component A) has CI- or OCH₃-endgroups and the content of OH or phenolate-endgroups is at most 0.05 % by weight. The amount of phenolic end groups is determined by potentiometric titration.

According to a preferred embodiment, the polyarylene(ether)sulfone of component A) has at most 0.04% by weight, more specifically at most 0.03% by weight, of phenolic end groups. According to a further preferred embodiment, the polyarylene(ether)sulfone of component A) has at most 0.02% by weight, more specifically at most 0.01% by weight, even more specifically at most 0.005 % by weight of phenolic end groups. It may be preferred, if the polyarylene(ether)sulfone of component A) has virtually no phenolic end groups.

For the purposes of the present invention, the expression "phenolic end group" means a hydroxy group bonded to an aromatic ring and optionally also present in deprotonated form. The person skilled in the art is aware that a phenolic end group can also take the form of what is known as a phenolate end group by virtue of cleavage of a proton as a consequence of exposure to a base. The expression "phenolic end groups" therefore expressly comprises not only aromatic OH groups but also phenolate groups.

The proportion of phenolic end groups is preferably determined via potentiometric titration. For this, the polymer is dissolved in dimethylformamide and is titrated with a solution of tetrabutylammonium hydroxide in toluene/methanol. The end point is recorded potentiometrically. The proportion of halogen end groups is preferably determined by means of elemental analysis.

The weight-average molar masses M_{w} of the polyarylene(ether)sulfones A) of the present invention are preferably from 10 000 to 150 000 g/mol, in particular from 15 000 to 120 000 g/mol, particularly preferably from 18 000 to 100 000 g/mol, determined by means of gel permeation chromatography in dimethylacetamide as solvent against narrowly distributed polymethyl methacrylate as standard.

Production processes that lead to the abovementioned polyarylene(ether)sulfones are known per se to the person skilled in the art and are described by way of example >P Herman F. Mark, "Encyclopedia of Polymer Science and Technology", third edition, volume 4, 2003, chapter "Polysulfones" pages 2 to 8, and also in Hans R. Kricheldorf, "Aromatic Polyethers" in: Handbook of Polymer Synthesis, second edition, 2005, pages 427 to 443.

The synthesis of the polyarylene(ether)sulfones can generally be done by polycondensation of appropriate monomers in dipolar-aprotic solvents at elevated temperatures (R.N. Johnson et.al., J.Polym. Sci. A-1 5 (1967) 2375, J.E. McGrath et.al., Polymer 25 (1984) 1827).

The production of polyarylene(ether)sulfones with simultaneous control of end groups is generally known to the person skilled in the art and is known from the literature (e.g. McGrath et al. Polym. Eng. Sci. 17, 647 (1977)).

The known polyarylene(ether)sulfones usually have halogen end groups, in particular -F or -Cl, or phenolic OH end groups or phenolate end groups, where the latter can be present as such or in reacted form, in particular in the form of -OCH₃ end groups.

Particular preference is given to the reaction, in aprotic polar solvents and in the presence of anhydrous alkali metal carbonate, in particular sodium carbonate, potassium carbonate, calcium carbonate, or a mixture thereof, very particularly preferably potassium carbonate, between at least one aromatic compound having two halogen substituents and at least one aromatic compound having two functional groups reactive toward abovementioned halogen substituents. One particularly suitable combination is N-methylpyrrolidone as solvent and potassium carbonate as base.

It is preferable that the polyarylene(ether)sulfones as component A) have either halogen end groups, in particular chlorine end groups, or etherified end groups, in particular alkyl ether end groups, these being obtainable via reaction of the OH or, respectively, phenolate end groups with suitable etherifying agents.

Examples of suitable etherifying agents are monofunctional alkyl or aryl halide, e.g. C₁-C₆-alkyl chloride, C₁-C₆-alkyl bromide, or C₁-C₆-alkyl iodide, preferably methyl chloride, or benzyl chloride, benzyl bromide, or benzyl iodide, or a mixture thereof. For the purposes of the polyarylene(ether)sulfones of component A) preferred end groups are halogen, in particular chlorine, alkoxy, in particular methoxy, aryloxy, in particular phenoxy, or benzyloxy.

As component B) the inventive composition comprises from 10 to 50 % by weight of at least one semi-aromatic polyamide.

"Semi-aromatic polyamide" in this context means, that the polyamide used as component B) is built from aliphatic as well as aromatic monomers so that the polymer contains aliphatic and aromatic units.

Examples of polyamides that are suitable as component B) according to the present invention include polyamides that are obtained by reacting at least one dicarboxylic acid with at least one diamine, wherein part of the monomers have aromatic units so that the resulting polyamide is partly aromatic.

The at least one dicarboxylic acid that can preferably be used is selected from alkanedicarbox-ylic acids having 4 to 12, more specifically 6 to 12 and in particular 6 to 10 carbon atoms, and aromatic dicarboxylic acids. Examples for suitable dicarboxylic acids are adipic acid, azelaic acid, sebacic acid, dodecanedioic acid, terephthalic and isophthalic acid.

The at least one diamine include alkane diamines having 6 to 12, in particular 6 to 10, carbon atoms, and aromatic diamines. Examples for suitable diamines are m-xylylenediamine (MXDA), di-(4-aminophenyl)methane, di-(4-aminocyclohexyl)methane, 2,2-di-(4-aminophenyl)propane, 2,2-di-(4-aminocyclohexyl)propane, 1,5-diamino-2-methylpentane, hexamethylenediamine, 1,9-nonanediamine, trimethylhexamethylenediamine, dimethyldiaminodicyclohexylmethane and phenylenediamine.

According to a further embodiment, the at least one polyamide as component B) may be obtained by copolymerization of two or more monomers (e.g. of the abovementioned monomers). Also mixtures of a plurality of polyamides in any desired mixing ratio may be suitable.

Further suitable components B) include polyamides wherein parts thereof are derived from cyclic amides, in particular from lactams having 7 to 13 ring members. Examples for such lactams are ε-caprolactam, w-caprylolactam, ω-laurolactam.

According to a specific embodiment the polyamide B) may be obtained by using a 1:1 molar ratio of MXDA with adipic acid.

Furthermore, as component B), a semi-aromatic copolyamide has often proven particularly suitable. Examples are PA 6/6T and PA 66/6T having a triamine content of generally less than 0.5 and typically preferably less than 0.3 wt% (see EP-A 299 444). Also, the at least one semi-aromatic polyamide as component B) may be at least one high-temperature-resistant polyamide as disclosed in EP-A19 94 075 (PA 6T/6I/MXD6).

As component B) it may also be preferred to use at least one semi-aromatic copolyamide having a low triamine content, for example as described in EP-A 129 195 and EP-A 129 196.

The at least one polyamide which may be used as component B) of the inventive composition may specifically be chosen from the following non-exhaustive list:
- PA 4T: butanediamine, terephthalic acid
- PA 6T: hexamethylenediamine, terephthalic acid
- PA 9T: 1,9-nonanediamine, terephthalic acid
- PA MXD6: m-xylylenediamine, adipic acid
- PA 6I: hexamethylenediamine, isophthalic acid
- PA 6-3-T: trimethylhexamethylenediamine, terephthalic acid
- PA 6/6T: (PA 6 (from ε-caprolactam) and PA 6T)
- PA 6I/6T: (PA 6I and PA 6T)
- PA 6T66: hexamethylenediamine, terephthalic acid and adipic acid
- PA 12/MACMI: laurolactam, dimethyldiaminodicyclohexylmethane, isophthalic acid
- PA 12/MACMT: laurolactam, dimethyldiaminodicyclohexylmethane, terephthalic acid
- PA PDA-T: phenylenediamine, terephthalic acid

Preferably, the at least one semi-aromatic polyamide as component B) is selected from PA 9T, PA 4T, PA 6I/6T and PA 6T66.

According to one specific embodiment, component B) is PA 9T. In a further embodiment, component B) is PA 4T. Still a further embodiment of the invention uses PABT6I as the at least one semi-aromatic polyamide as component B). According to still a further embodiment, the at least one polyamide B) is PA 6T66.

It may be preferred if the inventive composition comprises component B) in an amount of from 10 to 45, more specifically 10 to 40 % by weight of the composition. Furthermore, it may be preferred, if the polyamide component B) is present in an amount of 10 to 35 % by weight, more particularly 10 to 30 % by weight. It may be further suitable to use component B) in amounts of from 12 to 45 % by weight, more specifically 12 to 40 % by weight, in particular 12.5 to 40 % by weight. In a very specific embodiment of the invention, the composition comprises 12.5 to 35 %, more particularly 15 to 35 %, more specifically 15 to 30 % by weight of component B).

The inventive composition comprises 4 to 15 % by weight of an aluminum phosphinate as component C). The aluminum phosphinate should have high thermal stability and relatively low vola-tileness. For example, aluminum diethyl phosphinate is particularly suitable as component C). Aluminum diethyl phosphinate is commercially available, e.g. Exolith OP1230 (Clariant).

According to a specific embodiment, component C) is used in amounts of 4 to 14 % by weight, more specifically 4 to 13 % by weight of the composition. A further specific embodiment of the invention uses 4 to 12.5 %, more specifically 7 to 12.5 % by weight of component C). According to a further embodiment, amounts of 4 to 10 % by weight of component C) are suitable.

The acid scavenger (component D)) of the inventive composition is present in amounts of 0.01 to 2 % by weight. Suitable acid scavengers that can be used as component D) in the inventive compositions are, for example, selected from metal salts of phosponic acid, half ester metal salts of phosphonic acid and stannates and any mixture of these acid scavengers. According to one embodiment, acid scavengers based on mono- or disalts of metals of a phosphonic acid or mixtures of phosphonic acids or their half ester salts of metals as described in EP 2100916A1 are used. The metal is typically selected from the metals of group 1, 2 and 3 of the periodic table or is selected from Ti, Zn and Al. According to a further embodiment, acid scavengers based on stannates, such as, for example zinc stannate (ZnSnO₃), which is commercially available (e.g. Flamtard S), are used. Component D) is preferably used in amounts of 0.01 to 1.8, more specifically 0.05 to 1.5 % by weight of the composition.

According to a further aspect of the invention, the compositions of the present invention additionally comprise at least one compatibilizer as component E). According to the present invention, optional component E) is used in amounts of from 0 to 10 % by weight, preferably from 0 to 8 % by weight, more specifically from 0 to 5 % by weight, even more specifically from 0 to 4 % by weight of the composition. A "compatibilizer" is understood to be a compound that enhances compatibility between the components of a polymer blend. Namely, according to this aspect of the invention, component E) particularly compatibilizes the polyarylene(ether)sulfone A) and the polyamide B) components of the inventive composition.

If present (amounts >0 % by weight), component E) is preferably used in amounts of from 0.5 to 10 % by weight of the composition. It may be preferred if 1 to 9 % by weight, in particular 1.5 to 8 % by weight, more specifically 2 to 8 % by weight of component E) are present in the inventive composition. According to still a further embodiment, amounts of from 0.5 to 7.5, more specifically 0.5 to 5 % by weight of component E) are present.

Suitable compatibilizers E) are, for example, selected from polyarylene(ether)sulfones having at least 0.2 %, preferably at least 0.25 %, by weight of phenolic end groups, as determined by potentiometric titration. According to a further embodiment, the polyarylene(ether)sulfones useful as component E) have at least 0.3 %, more specifically at least 0.35 % by weight phenolic end groups.

According to a further embodiment of the invention, the polyarylene(ether)sulfone that can be used as component E) in the inventive compositions comprises at least one polyarylene(ether)sulfone having an average of at least 1.5 phenolic end groups per polymer chain. The term "on average" here means numeric average.

Polyarylene(ether)sulfones are a class of polymers known to a person skilled in the art. Their production and the simultaneous control of end groups is also generally known to the person skilled in the art and is described above in connection with component A). In particular, the synthesis of such polyarylene(ether)sulfones may be done by polycondensation of appropriate monomers in dipolar-aprotic solvents at elevated temperatures (R.N. Johnson et.al., J.Polym. Sci. A-1 5 (1967) 2375, J.E. McGrath et.al., Polymer 25 (1984) 1827). To be suitable as component E) in the inventive composition, the polyarylene(ether)sulfone comprises at least 0.2 % (or any of the limits defined herein) by weight of phenolic end groups.

It may be preferred that the polyarylene(ether)sulfone is composed of units of the general formula II as defined and preferably defined above for component A). Particularly preferred polyarylene(ether)sulfones E) are termed polyether sulfone (PESU). This embodiment is very particularly preferred.

The preferred polyarylene(ether)sulfones used as optional component E) generally have average molar masses Mₙ (number average) in the range from 5000 to 60 000 g/mol, and relative viscosities of from 0.20 to 0.95 dl/g. The relative viscosities of the polyarylene(ether)sulfones are determined in 1% by weight N-methylpyrrolidone solution at 25°C in accordance with DIN EN ISO 1628-1.

The polyarylene(ether)sulfones used as optional component E) preferably have weight-average molar masses M_{w} of from 10 000 to 150 000 g/mol, in particular from 15 000 to 120 000 g/mol, particularly preferably from 18 000 to 100 000 g/mol, determined by means of gel permeation chromatography in dimethylacetamide as solvent against narrowly-distributed polymethyl methacrylate as standard.

A preferred process for producing polyarylene(ether)sulfones suitable as component E) is described below and comprises the following steps in the sequence a-b-c:
(a) provision of at least one polyarylene(ether)sulfone E*) in the presence of a solvent (S), where the content of phenolic end groups in this polyarylene(ether)sulfone is appropriate for the desired component E), where the phenolic end groups thereof are present in the form of phenolate end groups, and this polyarylene(ether)sulfone is preferably composed of units of the general formula II as defined above,
(b) addition of at least one acid, preferably of at least one polybasic carboxylic acid, and
(c) obtaining the polyarylene(ether)sulfone suitable as component E) in the form of a solid.

The polyarylene(ether)sulfone E*) is preferably provided here in the form of a solution in the solvent (S).

There are in principle various ways of providing the polyarylene(ether)sulfones suitable as component E). By way of example, an appropriate polyarylene(ether)sulfone E*) can be brought directly into contact with a suitable solvent and directly used in the process of the invention, i.e. without further reaction. As an alternative, prepolymers of polyarylene(ether)sulfones can be used and reacted in the presence of a solvent, whereupon the polyarylene(ether)sulfones E*) described are produced in the presence of the solvent.

However, the polyarylene(ether)sulfone(s) E*) is/are preferably provided in step (a) via reaction of at least one starting compound of structure X-Ar-Y (s1) with at least one starting compound of structure HO-Ar¹-OH (s2) in the presence of a solvent (S) and of a base (B), where
- Y is a halogen atom,
- X is selected from halogen atoms and OH, and
- Ar and Ar¹ independently of one another are an arylene group having from 6 to 18 carbon atoms.

The ratio of (s1) and (s2) here is selected in such a way as to produce the desired content of phenolic end groups. Suitable starting compounds are known to the person skilled in the art or can be produced by known methods.

Hydroquinone, resorcinol, dihydroxynaphthalene, in particular 2,7-dihydroxynaphthalene, 4,4'-dihydroxydiphenyl sulfone, bisphenol A, and 4,4'-dihydroxybiphenyl are particularly preferred as starting compound (s2).

However, it is also possible to use trifunctional compounds. In this case, branched structures are produced. If a trifunctional starting compound (s2) is used, preference is given to 1,1,1-tris(4-hydroxyphenyl)ethane.

The quantitative proportions to be used are in principle a function of the stoichiometry of the polycondensation reaction that proceeds, with cleavage of the theoretical amount of hydrogen chloride, and the person skilled in the art adjusts these in a known manner. However, an excess of (s2) is preferable, in order to increase the number of phenolic OH end groups.

In this embodiment, the molar (s2)/(s1) ratio is particularly preferably from 1.005 to 1.2, in particular from 1.01 to 1.15, and very particularly preferably from 1.02 to 1.1.

As an alternative, it is also possible to use a starting compound (s1) having X = halogen and Y = OH. In this case, an excess of hydroxy groups is achieved via addition of the starting compound (s2). In this case, the ratio of the phenolic end groups used to halogen is preferably from 1.01 to 1.2, in particular from 1.03 to 1.15, and very particularly preferably from 1.05 to 1.1.

It is preferable that the conversion in the polycondensation reaction is at least 0.9, so as to provide an adequately high molecular weight. If a prepolymer is used as precursor of the polyarylene(ether)sulfone, the degree of polymerization is based on the number of actual monomers.

Preferred solvents (S) are aprotic polar solvents. The boiling point of suitable solvents is moreover in the range from 80 to 320°C, in particular from 100 to 280°C, preferably from 150 to 250°C. Examples of suitable aprotic polar solvents are high-boiling ethers, esters, ketones, asymmetrically halogenated hydrocarbons, anisole, dimethylformamide, dimethyl sulfoxide, sulfolane, N-ethyl-2-pyrrolidone, and N-methyl-2-pyrrolidone.

The reaction of the starting compounds (s1) and (s2) preferably takes place in the abovementioned aprotic polar solvents (S), in particular N-methyl-2-pyrrolidone.

The person skilled in the art knows per se that the reaction of the phenolic OH groups preferably takes place in the presence of a base (Ba), in order to increase reactivity with respect to the halogen substituents of the starting compound (s1).

It is preferable that the bases (Ba) are anhydrous. Particularly suitable bases are anhydrous alkali metal carbonate, preferably sodium carbonate, potassium carbonate, calcium carbonate, or a mixture thereof, and very particular preference is given here to potassium carbonate.

A particularly preferred combination is N-methyl-2-pyrrolidone as solvent (S) and potassium carbonate as base (Ba).

The reaction of the suitable starting compounds (s1) and (s2) is carried out at a temperature of from 80 to 250°C, preferably from 100 to 220°C, and the boiling point of the solvent provides an upper restriction on the temperature here. The reaction preferably takes place within a period of from 2 to 12 h, in particular from 3 to 8 h.

It has proven advantageous, after step (a) and prior to conduct of step (b), to filter the polymer solution. This removes the salt formed during the polycondensation reaction, and also any gel that may have formed.

It has also proven advantageous for the purposes of step (a) to adjust the amount of the polyarylene(ether)sulfone E*), based on the total weight of the mixture of polyarylene(ether)sulfone E*) and solvent (S), to from 10 to 70% by weight, preferably from 15 to 50% by weight.

For the purposes of step (b), at least one acid is added, preferably at least one polybasic carboxylic acid, to the polyarylene(ether)sulfone E*) from step (a), preferably to the solution of the polyarylene(ether)sulfone E*) in the solvent (S).

It is also possible to add at least one polybasic carboxylic acid to the precipitant.

"Polybasic" means a basicity of at least 2. The basicity is the (if appropriate average) number of COOH groups per molecule. Polybasic means basicity of two or higher. For the purposes of the present invention, preferred carboxylic acids are dibasic and tribasic carboxylic acids.

The polybasic carboxylic acid can be added in various ways, in particular in solid or liquid form or in the form of a solution, preferably in a solvent miscible with the solvent (S).

The number-average molar mass of the polybasic carboxylic acid is preferably at most 1500 g/mol, in particular at most 1200 g/mol. At the same time, the number-average molar mass of the polybasic carboxylic acid is preferably at least 90 g/mol.

Particularly suitable polybasic carboxylic acids are those according to the general structure (IX):

HOOC-R-COOH formula (IX),

where R represents a hydrocarbon moiety having from 2 to 20 carbon atoms and optionally comprising further functional groups, preferably selected from OH and COOH.

Preferred polybasic carboxylic acids are C₄-C₁₀ dicarboxylic acids, in particular succinic acid, glutaric acid, adipic acid, and tricarboxylic acids, in particular citric acid. Particularly preferred polybasic carboxylic acids are succinic acid and citric acid.

In order to provide adequate conversion of the phenolate end groups to phenolic end groups, it has proven advantageous to adjust the amount of the polybasic carboxylic acid(s) used in respect of the amount of the phenolate end groups.

For the purposes of step (b) it is preferable to add a polybasic carboxylic acid so that the amount of carboxy groups is from 25 to 200 mol%, preferably from 50 to 150 mol%, particularly preferably from 75 to 125 mol%, based on the molar amount of phenolic end groups.

If the amount of acid added is too small, the precipitation properties of the polymer solution are inadequate, while any markedly excessive addition can cause discoloration of the product during further processing.

For the purposes of step (c), the polyarylene(ether)sulfone E) is obtained in the form of solid. In principle, various processes can be used for obtaining the material in the form of solid. However, it is preferable to obtain the polymer composition via precipitation.

The preferred precipitation process can in particular take place via mixing of the solvent (S) with a poor solvent (S'). A poor solvent is a solvent in which the polymer composition is not soluble. This poor solvent is preferably a mixture of a non-solvent and a solvent. A preferred non-solvent is water. A preferred mixture (S') of a solvent with a non-solvent is preferably a mixture of the solvent (S), in particular N-methyl-4-pyrrolidone, and water. It is preferable that the polymer solution from step (b) is added to the poor solvent (S'), the result being precipitation of the polymer composition. It is preferable here to use an excess of the poor solvent. It is particularly preferable that the polymer solution from step (a) is added in finely dispersed form, in particular in droplet form.

If the poor solvent (S') used comprises a mixture of the solvent (S), in particular N-methyl-2-pyrrolidone, and of a non-solvent, in particular water, a preferred solvent:non-solvent mixing ratio is then from 1:2 to 1:100, in particular from 1:3 to 1:50.

A mixture of water and N-methyl-2-pyrrolidone (NMP) in combination with N-methyl-2-pyrrolidone as solvent (S) is preferred as poor solvent (S'). An NMP/water mixture in the ratio of from 1:3 to 1:50, in particular 1:30, is particularly preferred as poor solvent (S').

The precipitation is particularly efficient if the content of polymer composition in the solvent (S), based on the total weight of the mixture made of polymer composition and solvent (S), is from 10 to 50% by weight, preferably from 15 to 35% by weight.

The potassium content of component C) is preferably at most 600 ppm. Potassium content is determined by means of atomic spectroscopy.

Also suitable as component E) are certain functionalized polyarylene(ether)sulfones such as the polyarylene(ether)sulfones comprising naphthalic acid anhydride endgroups as described in WO 2018/141552, wherein the content of phenolic end groups is as defined above. The polyarylene(ether)sulfones described in WO 2018/141552 that are suitable as compatibilizer component E) according to the present invention are preferably composed of units of the general formula II as defined and preferably defined above for the polyarylene(ether)sulfones of component A) and contain naphthalic acid anhydride endgroups of formula (I): 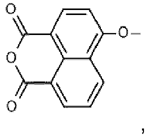 wherein the content of phenolic end groups is as defined above for component E).

The naphthalic acid anhydride endgroup containing polyarylene(ether)sulfones according to WO 2018/141552 are also called "PNA" in the following. It may be possible that the PNA is branched and has more than two end groups per individual polymer chain. Typically, the PNA is linear and has two end groups per individual polymer chain.

The amount of end groups of formula (I) can be small or very small, that is only few of the end groups are endgroups of formula (I). It may be preferred that the polyarylether sulfone comprises at most 10% endgroups of formula (I), or in other words that at most ten of 100 end groups are end groups of formula (I). In the case the PNA is linear mathematically at most every fifth individual polymer chain has one end group of formula (I) or that at most every tenth individual polymer chain has two end groups of formula (I). The person skilled in the art appreciates that in practice other distributions fulfill the requirement. It may be preferred that at most 25%, that is at most 25 of 100 end groups are end groups of formula (I). Any percentage of end groups between 10% and 80% may be end groups of formula (I), such as 20%, 30%, 40% 50%, 60% or 70% or any uneven percentage in between 10% and 80%. It may be preferred that from 10% to 80% end groups are end groups of formula (I). It may be more preferred that from 15 to 70%, such as 25% to 60% end groups are end groups of formula (I), for instance from 30% to 50%.

The nature of the end groups which are not end groups of formula (I) is not particularly limited, with the prerequisite that the PNA is suitable as component E) (compatibilizer) if it contains at least 0.2 % by weight of phenolic end groups, as defined and preferably defined above. Possible end groups which are not end groups of formula (I) are phenolic OH end groups or phenolate end groups, phenolic alkoxy end groups, among which -OCH₃ end groups may be preferred, amino end groups, among which -NH₂ may be preferred, halogen end groups, which may be -F or -Cl. Cl may be most preferred among the halogen end groups. It is also possible that the end groups which are not end groups of formula (I) are phenolic anhydride end groups. Generally it may be preferred that the end groups other than those of formula (I) are CI-, OH- and OCH₃.

For example any of the PNA types PNA-1 to PNA-10 listed in Table A may be preferably used as component E), provided the respective PNA has at least 0.2 % by weight of phenolic end groups, as defined and preferably defined above:

**Table A**

| PNA No. | Polyarylene(ether)sulfone | % endgroups formula (I) | Further endgroups |
|---|---|---|---|
| PNA-1 | PPSU-NA | 15 to 30 | Cl, OH |
| PNA-2 | PPSU-NA | 15 to 30 | OH, OCH₃ and CI |
| PNA-3 | PPSU-NA | 40 to 80 | OH, Cl |
| PNA-4 | PPSU-NA | 40 to 80 | OH, OCH₃ and CI |
| PNA-5 | PESU-NA | 25 to 50 | Cl, OH |
| PNA-6 | PESU-NA | 25 to 50 | OH, CI, OCH₃ |
| PNA-7 | PSU-NA | 20 to 40 | Cl, OH |
| PNA-8 | PSU-NA | 20 to 40 | OH, CI, OCH₃ |
| PNA-9 | PSU-NA | 30 to 75 | Cl, OH |
| PNA-10 | PSU-NA | 30 to 75 | OH, CI, OCH₃ |

For the purposes of the present disclosure, abbreviations such as PPSU, PESU, and PSU are in accordance with DIN EN ISO 1043-1:2001. According to one specific embodiment, component E) is selected from PNA based on PPSU, in particular any of the individually mentioned PPSU above.

The synthesis of the PNAs is described in WO 2018/141552.

A specific embodiment of the invention relates to compositions, where no component E) is contained, where the amount of E), as defined herein, is 0 % by weight.

According to a further aspect of the invention, the compositions of the present invention additionally comprise at least one fibrous or particulate filler (optional component F)). According to the present invention, component F) is used in amounts of from 0 to 60 % by weight, in particular 0 to 50 % by weight, more specifically 0 to 40 % by weight, even more specifically 0 to 30 % by weight of the composition.

If present, component F) is preferably used in amounts of from 5 to 60 % by weight of the composition. It may be preferred according this aspect of the invention, if 5 to 50% by weight or 10 to 50 % by weight, in particular 15 to 40 % by weight, more specifically 20 to 30 % by weight of component F) are present in the inventive composition. According to still a further embodiment, amounts of from 25 to 30 % by weight of component F) are being used.

According to one embodiment, preference is given to component F) being at least one fibrous filler. The at least one fibrous filler is preferably selected from carbon fiber, potassium titanate whisker, aramid fiber and glass fiber, more specifically selected from carbon fiber and glass fiber. According to one preferred embodiment, component F) is glass fiber. If at least one glass fiber is used, it can be equipped with a sizing, preferably with a polyurethane sizing, and/or with a coupling agent, to improve compatibility with the matrix material. The diameter of the at least one carbon fiber and/or glass fiber used is generally in the range of from 5 to 20 µm, more specifically 5 to 18 µm.

The at least one glass fiber may either be short glass fibers or have the shape of continuous-filament fibers (rovings). The average length of the at least one glass fiber in the finished injection molding is preferably in the range of from 0.08 to 2 mm.

The at least one carbon fiber and/or glass fiber can also be used in the form of textiles, mats, or glass-silk rovings.

According to a further embodiment, component F) is at least one particulate filler. Suitable particulate fillers may be selected from amorphous silica, carbonate, such as magnesium carbonate and chalk, powdered quartz, mica, various silicates, such as clays, muscovite, biotite, suzoite, tin maletite, talc, chlorite, phlogopite, feldspar, calcium silicates, such as wollastonite, and aluminum silicates, such as kaolin, particularly calcined kaolin.

It may be preferred if at least 95% by weight, preferably at least 98% by weight, of the particles of the particulate filler have a diameter (greatest diameter through the geometric center), determined on the finished product, of less than 45 µm, preferably less than 40 µm, where the value known as the aspect ratio of the particles is in the range of from 1 to 25, preferably in the range of from 2 to 20, determined on the finished product. The aspect ratio is the ratio of particle diameter to thickness (greatest dimension to smallest dimension, in each case through the geometric center).

The particle diameters can by way of example be determined here by recording electron micrographs of thin layers of the polymer mixture and evaluating at least 25 filler particles, preferably at least 50. The particle diameters can also be determined by way of sedimentation analysis, as in Transactions of ASAE, page 491 (1983). Sieve analysis can also be used to measure the proportion by weight of the fillers with diameter less than 40 µm.

The at least one particulate filler may particularly preferably be selected from talc, kaolin, such as calcined kaolin, and wollastonite. The particulate filler used according to the present invention may be a mixture of two or all of said fillers. Among these, particular preference is given to talc having a proportion of at least 95% by weight of particles with diameter smaller than 40 µm and with aspect ratio of from 1.5 to 25, in each case determined on the finished product. Preferably, Kaolin can have a proportion of at least 95% by weight of particles with diameter smaller than 20 µm and preferably can have an aspect ratio of from 1.2 to 20, which in each case is determined on the finished product.

According to one specific embodiment, the inventive compositions do not contain a component F) (0 % by weight).

Still a further aspect of the present invention relates to compositions additionally comprising at least one impact modifier (optional component G)). The impact modifier component G) may be at least one impact-modifying rubber. Also, a mixture of two or more different impact-modifying rubbers may be used.

According to the present invention, component G) is used in amounts of from 0 to 30 % by weight, more specifically from 0 to 20 % by weight, even more specifically from 0 to 10 % by weight of the composition. If present, component G) is preferably used in amounts of from 5 to 30 % by weight of the composition. It may be preferred according this aspect of the invention if 5 to 25 % by weight, in particular 5 to 20 % by weight, more specifically 10 to 20 % by weight of component G) are present in the inventive composition. According to still a further embodiment, amounts of from 25 to 30 % by weight of component G) are present.

For the purposes of the present invention, rubbers are generally crosslinkable polymers which have elastomeric properties at room temperature.

Preferred rubbers which increase the toughness of compositions usually have two significant features: they comprise an elastomeric fraction which has a glass transition temperature below - 10° C., preferably below -30° C, and they contain at least one functional group which can interact with the polyamide B) or the polyarylene(ether)sulfone A) or both. Examples of suitable functional groups are carboxylic acid, carboxylic anhydride, carboxylic ester, carboxamide, car-boximide, amino, hydroxyl, epoxy, urethane and oxazoline groups.

Generally preferred at least one functionalized rubber as component G) include functionalized polyolefin rubbers built up from the following components:
d1) from 40 to 99% by weight of at least one alpha-olefin having from 2 to 8 carbon atoms;
d2) from 0 to 50% by weight of a diene;
d3) from 0 to 45% by weight of at least one C₁-C₁₂-alkyl ester of acrylic or methacrylic acid, or mixtures of esters of this type;
d4) from 0 to 40% by weight of at least one ethylenically unsaturated C₂-C₂₀ mono- or dicarboxylic acid or of a functional derivative of an acid of this type;
d5) from 1 to 40% by weight of at least one monomer containing epoxy groups; and
d6) at least one monomer capable of free-radical polymerization.

Examples of suitable at least one alpha-olefin (d1) are ethylene, propylene, 1-butylene, 1-pentylene, 1-hexylene, 1-heptylene, 1-octylene, 2-methylpropylene, 3-methyl-1-butylene and 3-ethyl-1-butylene. Ethylene and propylene may be preferred.

Examples of suitable at least one diene monomer (d2) are conjugated dienes having from 4 to 8 carbon atoms, such as isoprene and butadiene, non-conjugated dienes having from 5 to 25 carbon atoms, such as 1,4-pentadiene, 1,4-hexadiene, 1,5-hexadiene, 2,5-dimethyl-1,5-hexadiene and 1,4-octadiene, cyclic dienes, such as cyclopentadiene, cyclohexadienes, cyclooctadienes and dicyclopentadiene, and also alkenylnorbornenes, such as 5-ethylidene-2-norbornene, 5-butylidene-2-norbornene, 2-methallyl-5-norbornene and 2-isopropenyl-5-norbornene, and tricy-clodienes, such as 3-methyltricyclo [5.2.I.02•6]-3,8-decadiene, or mixtures of these. Preference is given to 1,5-hexadiene, 5-ethylidenenorbornene and dicyclopentadiene. The diene content can generally be from 0 to 50% by weight, whereby it may be preferred that it is from 0.5 to 50% by weight, whereby it may be particularly preferably from 2 to 20% by weight and more particularly preferably from 3 to 15% by weight, based on the total weight of the olefin polymer.

Examples of suitable at least one ester (d3) are methyl, ethyl, propyl, n-butyl, isobutyl, 2-ethylhexyl, octyl and decyl acrylates and the corresponding methacrylates. Among these, particular preference may be given to methyl, ethyl, propyl, n-butyl and 2-ethylhexyl acrylate and methacrylate.

Instead of the at least one ester (d3), or in addition to these, the olefin polymers may also comprise acid-functional and/or latently acid-functional monomers in the form of at least one ethylenically unsaturated mono- or dicarboxylic acid (d4).

Examples of at least one monomer (d4) are acrylic acid, methacrylic acid, tertiary alkyl esters of these acids, in particular tert-butyl acrylate, and dicarboxylic acids, such as maleic acid and fumaric acid, and derivatives of these acids, and also their half-esters.

For the purposes of the invention, latently acid-functional monomers are those compounds which under the conditions of the polymerization or during incorporation of the olefin polymers into the compositions form free acid groups. Examples of these are anhydrides of dicarboxylic acids having from 2 to 20 carbon atoms, in particular maleic anhydride, and tertiary C1-C12-alkyl esters of the abovementioned acids, in particular tert-butyl acrylate and tert-butyl methacrylate. Ethylenically unsaturated dicarboxylic acids and anhydrides (d4) have the following formulae III and IV:

R⁵(COOR⁶)C = C(COOR⁷)R⁸ (III)

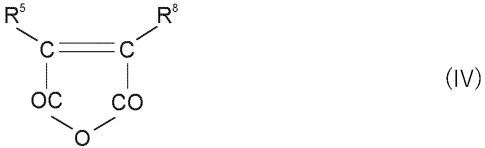

where R⁵, R⁶, R⁷ and R⁸, independently of one another, are H or C₁-C₆-alkyl.

Monomers d5 containing epoxy groups have the following formulae V and VI 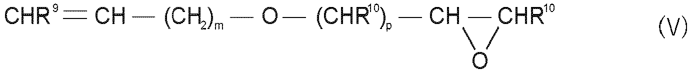 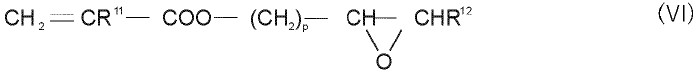 where R⁹, R¹⁰, R¹¹ and R¹², independently of one another, are H or C₁-C₆-alkyl, m is an integer from 0 to 20, and p is an integer from 0 to 10.

R⁵ to R¹² may preferably be hydrogen, m may preferably be 0 or 1 and p may preferably be 1.

Preferred compound (d4) and, respectively, (d5) may be selected from maleic acid, fumaric acid and maleic anhydride and, respectively, alkenyl glycidyl ethers and vinyl glycidyl ether.

Particularly preferred compounds of the formulae III and IV and, respectively, V and VI can be maleic acid and maleic anhydride and, respectively, acrylates and/or meth-acrylates both of which contain epoxy groups, in particular glycidyl acrylate and glycidyl methacrylate.

Particularly preferred at least one olefin polymer may be those made from 49.9 to 98.9% by weight, in particular from 59.85 to 94.85% by weight, of ethylene, and from 1 to 50% by weight, in particular from 5 to 40% by weight, of an ester of acrylic or methacrylic acid, and from 0.1 to 20.0% by weight, in particular from 0.15 to 15% by weight, of glycidyl acrylate and/or glycidyl methacrylate, acrylic acid and/or maleic anhydride.

Particularly suitable functionalized rubbers G) may be selected from ethylene-methyl methacrylate-glycidyl methacrylate polymer, ethylene-methyl acrylateglycidyl methacrylate polymer, ethylene-methyl acrylate-glycidyl acrylate polymer and an ethylene-methyl methacrylate-glycidyl acrylate polymer and any mixture of these.

Examples of other monomers (d6) are for instance vinyl esters and vinyl ethers and mixtures of these.

The polymers described above may be prepared by processes known per se or accessible to the person skilled in the art by applying the general knowledge, for instance preferably by random copolymerization at high pressure and elevated temperature.

The melt index of the copolymers may generally be from 1 to 80 g/min 10 min (measured at 190°C and 2.16 kg load).

Furthermore, functionalized ethylene-α-olefin-copolymers like ethylene-propylene-grafted-maleic anhydride or ethylene-1-butene-grafted maleic anhydride can also be used as impact modifiers in the inventive compositions.

Core-shell graft rubbers is another group of suitable impact-modifies G) that may be used according to the invention. These are graft rubbers which can be prepared in emulsion and composed of at least one hard and one soft constituent. Usually, a hard constituent is at least one polymer with a glass transition temperature of at least 25° C, and usually a soft constituent is at least one polymer with a glass transition temperature of not more than 0° C. These products generally have a structure made from a core (graft base) and from at least one shell (graft), and the structure is typically a result of the sequence of addition of the monomers. The soft constituent generally derives from butadiene, isoprene, at least one alkyl acrylate, at least one alkyl methacrylate or at least one siloxane and, if desired, at least one other comonomer. Suitable siloxane cores may be prepared, for example, starting from cyclic oligomeric octamethyltetrasiloxane or from tetravinyltetramethyltetrasiloxane. These may, for example, be reacted with y-mercaptopropylmethyldimethoxysilane in a ring-opening cationic polymerization, preferably in the presence of sulfonic acids, to give the soft siloxane core. The at least one siloxane may also be crosslinked by, for example, carrying out the polymerization in the presence of at least one silane having at least one hydrolyzeable group, such as halo or alkoxy, for example tetraethoxysilane, methyltrimethoxysilane or phenyltrimethoxysilane. Examples of suitable at least one comonomer for this are styrene, acrylonitrile and crosslinking or grafting monomers having more than one polymerizable double bond, for example diallyl phthalate, divinylbenzene, butanediol dia-crylate or triallyl (iso) cyanurate. The hard constituent generally derives from styrene, alpha-methylstyrene or from copolymers of these, and it may be preferred that the at least one comonomer here is acrylonitrile, methacrylonitrile or methyl methacrylate.

It may be preferred that the at least one core-shell graft rubber comprises a soft core and a hard shell or a hard core, a first soft shell and at least one further hard shell. The incorporation of at least one functional group here, such as carbonyl, carboxylic acid, anhydride, amide, imide, carboxylic ester, amino, hydroxyl, epoxy, oxazoline, urethane, urea, lactam or halobenzyl, may preferably take place by adding at least one suitably functionalized monomer during the polymerization of the final shell.

Examples of suitable functionalized monomers are maleic acid, maleic anhydride, half-esters or diesters, or maleic acid, tert-butyl (meth)acrylate, acrylic acid, glycidyl (meth-)acrylate and vinyloxazoline. The proportion of monomers with functional groups is generally from 0.1 to 25% by weight, whereby it may be preferably from 0.25 to 15% by weight, based on the total weight of the core-shell graft rubber. The weight ratio of soft to hard constituents is generally from 1:9 to 9:1, whereby it may be preferably from 3:7 to 8:2.

Rubbers of this type are known per se or accessible to the person skilled in the art by making use of the general knowledge and are described, for example, in EP-A 208 187.

Thermoplastic polyester elastomers are another group of suitable impact modifier that may be used as component G). For the purposes of the invention, polyester elastomers are segmented copolyether-esters which may comprise long-chain segments generally deriving from poly(alkylene) ether glycols and short-chain segments which may derive from low-molecular weight diols and dicarboxylic acids. Products of this type are known per se or accessible to the person skilled in the art and are described for example in U.S. Pat. No. 3,651.014. Corresponding products are also available commercially as Hytrel^{®} (Du Pont), Arnitel^{®} (Akzo) and Pelprene^{®} (Toyobo Co. Ltd.).

According to one specific embodiment, the inventive compositions do not contain a component G) (0 % by weight).

The inventive composition may optionally further comprise one or more auxiliaries H). According to the present invention, component H) is used in amounts of from 0 to 40 % by weight, in particular from 0 to 30 % by weight, more specifically from 0 to 20 % by weight, even more specifically from 0 to 10 % by weight, for example from 0 to 5 % by weight. If present it may be preferable that the composition comprises auxiliaries H) from 0.01 to 20 % by weight, more specifically from 1 to 20% by weight. It may be more preferred that H) is used in amounts of from 0.01 to 15% by weight, such as from 0.5 to 10% by weight. It may be even more preferred that the inventive composition comprises H) from 0.5 to 8 % by weight.

The at least one auxiliary may be selected from for example processing aids, pigments, stabilizers, and may also be a mixture of various additives. Other examples of conventional additives are oxidation retarders, agents to inhibit decomposition caused by heat or by ultraviolet light, lubricants and mold-release agents, dyes and plasticizers, which may be use alone or in any combination with any other auxiliary.

The amount of pigments and dyes is generally from 0 to 6% by weight, preferably it may be from 0.05 to 5% by weight, and in particular it may be from 0.1 to 3% by weight.

Pigments for the coloring of thermoplastics are well known, see for example R. Gächter and H. Müller, Taschenbuch der Kunststoffadditive [Plastics additives handbook], Carl Hanser Verlag, 1983, pages 494 to 510. A first preferred group of pigments that may be mentioned are white pigments, such as zinc oxide, zinc sulfide, white lead [2PbCO₃·Pb(OH)₂], lithopones, antimony white, and titanium dioxide. Of the two most familiar crystalline forms of titanium dioxide (rutile and anatase), it is typically in particular the rutile form which is used for white coloring of the compositions disclosed. Black color pigments which can be used according to the invention are iron oxide black (Fe₃O₄), spinel black [Cu(Cr, Fe)₂O₄], manganese black (a mixture composed of manganese dioxide, silicon dioxide, and iron oxide), cobalt black, and antimony black, and also it may be particularly preferably carbon black, which is mostly used in the form of furnace black or gas black. In this connection see G. Benzing, Pigmente für Anstrichmittel [Pigments for paints], Expert-Verlag (1988), pages 78ff.

Particular color shades can for instance be achieved by using inorganic chromatic pigments, such as chromium oxide green, or organic chromatic pigments, such as azo pigments or phthalocyanines. Pigments of this type are known to the person skilled in the art.

Examples of oxidation retarders and heat stabilizers which can be added to the inventive compositions are halides of metals of group I of the Periodic Table of the Elements, e.g. sodium halides, potassium halides, or lithium halides, examples being chlorides, bromides, or iodides. Zinc fluoride and zinc chloride can also be used. It is also possible to use sterically hindered phenols, hydroquinones, substituted representatives of said group, secondary aromatic amines, if appropriate in combination with phosphorus-containing acids, or to use their salts, or a mixture of said compounds, preferably in concentrations of up to 1% by weight.

Examples of UV stabilizers are various substituted resorcinols, salicylates, benzotriazoles, and benzophenones, the amounts generally used of these being up to 2% by weight.

Examples for lubricants mold-release agents, the amounts of which may generally be up to 2 %, preferably up to 1 % by weight, are stearyl alcohol, alkyl stearates, and stearamides, and also esters of pentaerythritol with long-chain fatty acids. It is also possible to use dialkyl ketones, such as distearyl ketone. It may be preferred that the inventive composition comprises from 0.1 to 2% by weight, more preferably from 0.1 to 1.75% by weight, particularly preferably from 0.1 to 1.5% by weight, and in particular from 0.1 to 0.9% by weight, of stearic acid and/or of stearates. In principle it is also possible to use other stearic acid derivatives, for example esters of stearic acid.

Stearic acid is preferably produced via hydrolysis of fats. The products thus obtained are usually mixtures composed of stearic acid and palmitic acid. These products therefore have a wide softening range, for example from 50 to 70°C, as a function of the constitution of the product. Preference may be given to using products with more than 20% by weight content of stearic acid, particularly preferably more than 25% by weight. It is also possible to use pure stearic acid (more than 98% by weight).

Component H) can moreover also include stearates. Stearates can be produced either via reaction of corresponding sodium salts with metal salt solutions (e.g. CaCl₂, MgCl₂, aluminum salts) or via direct reaction of the fatty acid with metal hydroxide (see for example Baerlocher Additives, 2005). It is typically preferable to use aluminum tristearate.

Other possible additives are nucleating agents, an example being talc powder.

Preparation of the compositions can be done by processes known in the art, e.g. extrusion. For example, the components are feed to melt mixing devices like extruders (single- or twin-screw), Brabender-mixers or Banburry-mixers or kneaders, mixed and then extruded. The extrudate is typically cooled and comminuted. Typically, after extrusion the strand is cooled and pelletized to obtain pellets or granules.

One specific embodiment of the present invention relates to a composition comprising
A) 20 to 75 % by weight of at least one polyarylene(ether)sulfone having at most 0.05 % by weight of phenolic end groups;
B) 12.5 to 40 % by weight of at least one semi-aromatic polyamide;
C) 4 to 12.5 % by weight of an aluminum phosphinate;
D) 0.05 to 1.5 % by weight of at least one an acid scavenger;
E) 0 to 10 % by weight of at least one compatibilizer;
F) 5 to 50 % by weight of at least one fibrous or particulate filler;
G) 0 to 30 % by weight of at least one impact modifier; and
H) 0 to 40 % by weight of at least one auxiliary;
wherein the sum of % by weight of the components of the composition is 100 % by weight.

A further preferred embodiment of the present invention relates to a composition comprising
A) 20 to 60 % by weight of at least one polyarylene(ether)sulfone having at most 0.05 % by weight of phenolic end groups;
B) 12.5 to 40 % by weight of at least one semi-aromatic polyamide;
C) 4 to 12.5 % by weight of an aluminum phosphinate;
D) 0.05 to 1.5 % by weight of at least one an acid scavenger;
E) 0 to 10 % by weight of at least one compatibilizer;
F) 10 to 50 % by weight of at least one fibrous or particulate filler;
G) 0 to 30 % by weight of at least one impact modifier; and
H) 0 to 40 % by weight of at least one auxiliary;
wherein the sum of % by weight of the components of the composition is 100 % by weight.

A further specific embodiment of the present invention relates to a composition consisting of
A) 20 to 80 % by weight of at least one polyarylene(ether)sulfone having at most 0.05 % by weight of phenolic end groups;
B) 10 to 50 % by weight of at least one semi-aromatic polyamide;
C) 4 to 15 % by weight of at least one aluminum phosphinate;
D) 0.01 to 2 % by weight of at least one acid scavenger;
E) 0 to 10 % by weight of at least one compatibilizer;
F) 0 to 60 % by weight of at least one fibrous or particulate filler;
G) 0 to 30 % by weight of at least one impact modifier; and
H) 0 to 40 % by weight of at least one auxiliary;
wherein the sum of % by weight of the components of the composition is 100 % by weight.

A further embodiment of the present invention relates to a composition consisting of
A) 20 to 75 % by weight of at least one polyarylene(ether)sulfone having at most 0.05 % by weight of phenolic end groups;
B) 12.5 to 40 % by weight of at least one semi-aromatic polyamide;
C) 4 to 12.5 % by weight of an aluminum phosphinate;
D) 0.05 to 1.5, more specifically 0.05 to 0.5 % by weight of at least one an acid scavenger;
E) 0 to 10 % by weight of at least one compatibilizer;
F) 5 to 50 % by weight of at least one fibrous or particulate filler;
G) 0 to 30 % by weight of at least one impact modifier; and
H) 0 to 40 % by weight of at least one auxiliary;
wherein the sum of % by weight of the components of the composition is 100 % by weight.

Still a further embodiment of the present invention relates to a composition consisting of
A) 20 to 60 % by weight of at least one polyarylene(ether)sulfone having at most 0.05 % by weight of phenolic end groups;
B) 12.5 to 40 % by weight of at least one semi-aromatic polyamide;
C) 4 to 12.5 % by weight of an aluminum phosphinate;
D) 0.05 to 1.5, more specifically 0.05 to 0.5 % by weight of at least one an acid scavenger;
E) 0 to 10 % by weight of at least one compatibilizer;
F) 10 to 50 % by weight of at least one fibrous or particulate filler;
G) 0 to 30 % by weight of at least one impact modifier; and
H) 0 to 40 % by weight of at least one auxiliary;
wherein the sum of % by weight of the components of the composition is 100 % by weight.

The components of the inventive composition can be mixed in any desired sequence and the order of dosing the individual components into the mixing device can be different, e.g. two or optionally three components can be pre-mixed or all components can be mixed together.

For the product performance a homogeneous mixing is important. To achieve this, generally mixing times from 0.1 to 30 minutes at temperatures of 280 up to 390°C, preferably 290 to 380°C are applied. After compounding the obtained strands are cooled and pelletized.

The compositions according to the invention show good mechanical performance and a unique combination of CTI-values (comparative tracking index) and fire resistant behavior.

The inventive composition can advantageously be used for the manufacture of a fiber, film, foam or shaped article. According to a further aspect, the present invention relates to a fiber, film or shaped article comprising the composition as described herein. Due to the good comparative tracking index the inventive composition is generally particularly suitable for producing electric or electronic components. As the inventive composition has a high temperature resistance and good chemical resistance, it is specifically suitable for the production of electric or electronic components, which are exposed to elevated temperatures and/or chemicals. Generally, the products which may be obtained from the inventive composition can be industry items such as in the vehicle sector e.g. in automobiles or planes. Likewise, they may be household items such as appliances or items with food contact. Furthermore, battery housings, parts for plumbing, energy absorbing foams can also be produced with the inventive composition.

**Examples:** The examples below provide further explanation of the invention, but do not restrict the same.

**Component A:** As component A a Polyethersulfone having a viscosity number of 49.0 ml/g was used. The used product had 0.19 wt.-% CI-Endgroups (Elemental analysis) and 0.23 wt.-% OCH₃-Endgroups (¹H-NMR). The amount of OH-endgroups was below the detection limit (< 0.02 wt.%). This component A is named "component A1" in the examples.

**Component B:** Component B1: A Polyamide 9T with a viscosity number of 120 ml/g (measured at 25°C in conc. H₂SO₄).

Component B2: A Polyamide 6T6I with a viscosity number of 120 ml/g (measured at 25°C in conc. H₂SO₄).

**Component C:** Component C1: Flame retardant Exolith OP1230.

Component CV: Flame retardant CR-733S (organic phosphate) from Daihachi Chemicals.

**Component D:** Component D1: Acid scavenger Flamtard S.

Component DV: Aluminumhydroxide, provided by Alteo as dried powder.

**Component E:** The preparation of the OH-terminated PESU (PESU-OH) was done according to the following procedure:
In a 4 I HWS-vessel with stirrer, Dean-Stark-trap, nitrogen-inlet and temperature control, 278.27 g (0.969 mol) 4,4'-Dichlorodiphenylsulfone (DCDPS), 250.17 g (1.00 mol) 4,4'-Dihydroxydiphenylsulfone (DHDPS), and 152.03 g (1.10 mol) Potassium carbonate (particle size 39.3 µm) are suspended under nitrogen atmosphere in 1000 ml NMP. Under stirring the mixture is heated up to 190°C. 30 I/h Nitrogen is purged through the mixture and the mixture is kept at 190°C for 6 h. After this time 500 ml NMP are added to cool down the mixture. Under nitrogen the mixture is allowed to cool down below 60°C. After filtration, 11 g succinic acid were added to the solution and the solution was stirred for 30 minutes, then the polymer solution is precipitated in water. The precipitated product is extracted with hot water (20 h at 85°C) and dried at 120°C for 24 h under reduced pressure. The V.N. of the product was 48.3 ml/g, the amount of OH-endgroups was 0.22 wt.% (determined by potentiometric titration). This component E is named "component E1" in the examples.

**Component F:** Glass fibers, chopped strands (length 4.5 mm) with a diameter of 10 µm and a PU-based sizing. This component F is named "component F1" in the examples.

**Component H:** Component H1: Naugard 445

Component H2: Sodiumhypophosphite

### Production and testing of compounds

Compounding was done using a twin screw extruder (ZSK 30), the barrel temperatures were set to keep the melt temperature below 380°C. Molding of the test samples was done at a melt temperature of 340°C and a mold temperature of 120°C. Tensile testing was done according to ISO 527 (E-Modulus, strength, tensile elongation). For some samples the tensile test was also done at 150°C. Impact strength was tested according to ISO 179 1eU, while notched impact was tested according to ISO 179 1eA. The CTI was measured according to IEC 60112 on samples having a thickness of 4 mm. The FR-performance was tested according to UL-94 with samples of 0.8 mm thickness. The solution viscosity of the Polyarylene(ether)sulfones was determined using a solution of 0.01g/ml in N-Methylpyrrolidon at 25°C. In the following Table, examples V1 and V2 are comparative examples (not according to the present invention).

**Table 1:**

| | **V1** | **V2** | **V3** | **V4** | **5** | **6** | **7** | **8** | **9** |
|---|---|---|---|---|---|---|---|---|---|
| **component A = A1 [wt%]** | 39.33 | 49.33 | 32.83 | 29.33 | 29.33 | 26.83 | 34.23 | 45.98 | 32.53 |
| **component B = B2 [wt%]** | 30 | 20 | 26.5 | 26.5 | 30 | 30 | 27.5 | 18.5 | 29.3 |
| **component C = C1 [wt%]** | - | - | - | - | 9.9 | 9.9 | 7.5 | 4.9 | 4.9 |
| **component C = CV [wt%]** | - | - | 10 | 10 | - | - | - | - | - |
| **component D = D1 [wt%]** | - | - | - | - | 0.1 | 0.1 | 0.1 | 0.1 | 0.1 |
| **component E = E1 [wt%]** | - | - | - | 3.5 | - | 2.5 | - | - | 2.5 |
| **component F = F1 [wt%]** | 30 | 30 | 30 | 30 | 30 | 30 | 30 | 30 | 30 |
| **component H = H1 [wt%]** | 0.65 | 0.65 | 0.65 | 0.65 | 0.65 | 0.65 | 0.65 | 0.5 | 0.65 |
| **component H = H2 [wt%]** | 0.02 | 0.02 | 0.02 | 0.02 | 0.02 | 0.02 | 0.02 | 0.02 | 0.02 |
| **ISO 179 1eU [kJ/m²]** | 45 | 41 | 38 | 39 | 43 | 46 | 45 | 42 | 40 |
| **ISO 179 1eA [kJ/m²]** | 7.6 | 7.5 | 6.6 | 7.0 | 7.4 | 7.6 | 7.4 | 7.3 | 7.5 |
| **CTI** | 225 | 200 | 225 | 225 | 225 | 250 | 250 | 225 | 225 |
| **UL-94 0.8 mm** | HB | HB | V-2 | V-2 | V-0 | V-0 | V-0 | V-0 | V-0 |

**Table 2:**

| | **10** | **11** | **V12** | **V13** | **V14** |
|---|---|---|---|---|---|
| **component A = A1 [wt%]** | 34.23 | 34.23 | 34.33 | 34.23 | 34.13 |
| **component B = B1 [wt%]** | - | 27.5 | - | - | - |
| **component B = B2 [wt%]** | 27.5 | - | 27.5 | 27.5 | 27.5 |
| **component C = C1 [wt%]** | 7.5 | 7.5 | | | - |
| **component C = CV [wt%]** | - | - | 7.5 | 7.5 | 7.5 |
| **component D = D1 [wt%]** | 0.1 | 0.1 | - | - | - |
| **component D = DV [wt%]** | - | - | - | 0.1 | 0.2 |
| **component E = E1 [wt%]** | - | - | - | - | - |
| **component F = F1 [wt%]** | 30 | 30 | 30 | 30 | 30 |
| **component H = H1 [wt%]** | 0.65 | 0.65 | 0.65 | 0.65 | 0.65 |
| **component H = H2 [wt%]** | 0.02 | 0.02 | 0.02 | 0.02 | 0.02 |
| **ISO 179 1eU [kJ/m²]** | 45 | 46 | 40 | 41 | - |
| **ISO 179 1eA [kJ/m²]** | 7.4 | 7.3 | 6.2 | 6.1 | - |
| **E-Modulus 150°C; [GPa]** | 5.95 | 5.13 | 5.89 | 5.90 | - |
| **CTI** | 250 | 250 | 200 | 200 | - |
| **UL-94 0.8 mm** | V-0 | V-0 | V-1 | V-1 | - |

As can be seen from the examples, the compositions according to the invention show good mechanical performance and a unique combination of CTI-values and FR-behavior (UL-94). Reference trials show poor FR-performance.

## Claims

1. A composition comprising
A) 20 to 80 % by weight of at least one polyarylene(ether)sulfone having at most 0.05 % by weight of phenolic end groups;
B) 10 to 50 % by weight of at least one semi-aromatic polyamide;
C) 4 to 15 % by weight of at least one aluminum phosphinate;
D) 0.01 to 2 % by weight of at least one acid scavenger;
E) 0 to 10 % by weight of at least one compatibilizer;
F) 0 to 60 % by weight of at least one fibrous or particulate filler;
G) 0 to 30 % by weight of at least one impact modifier; and
H) 0 to 40 % by weight of at least one auxiliary;
wherein the sum of % by weight of the components of the composition is 100 % by weight.

2. The composition according to claim 1, wherein the at least one polyamide of component B) is selected from the group consisting of PA 9T, PA 4T, PA 6T6I and PA 6T66.

3. The composition of claim 1 or 2, wherein the aluminum phosphinate is aluminum diethyl phosphinate.

4. The composition of any one of claims 1 to 3, wherein the at least one acid scavenger D) is selected from metal salts of phosponic acid, metal salts of half esters of phosphonic acid and stannates.

5. The composition of any one of claims 1 to 4, wherein the acid scavenger D) is zinc stannate.

6. The composition of any one of claims 1 to 5, comprising 20 to 75 % by weight of component A).

7. The composition of any one of claims 1 to 6, comprising 12.5 to 40 % by weight of component B).

8. The composition of any one of claims 1 to 7, comprising 4 to 12.5 % by weight of component C).

9. The composition of any one of claims 1 to 8, comprising 0.05 to 1.5 % by weight of component D).

10. The composition of any one of claims 1 to 9, comprising 5 to 50 % by weight of component F).

11. A use of the composition according to any one of claims 1 to 10 for the manufacture of a fiber, film, foam or shaped article.

12. The use of claim 11, wherein the fiber, film, foam or shaped article is an electric or electronic component.

13. A fiber, film or shaped article comprising the composition according to any one of claims 1 to 10.

14. The fiber, film, foam or shaped article of claim 13, wherein it is an electric or electronic component.

## Patentansprüche

1. Zusammensetzung, umfassend
A) 20 bis 80 Gew.-% von mindestens einem Polyarylen(ether)sulfon mit höchstens 0,05 Gew.-% phenolischen Endgruppen:
B) 10 bis 50 Gew.-% von mindestens einem semiaromatischen Polyamid;
C) 4 bis 15 Gew.-% von mindestens einem Aluminiumphosphinat;
D) 0,01 bis 2 Gew.-% von mindestens einem Säureabfangmittel;
E) 0 bis 10 Gew.-% von mindestens einem Verträglichmacher;
F) 0 bis 60 Gew.-% von mindestens einem faserigen oder partikelförmigen Füllstoff;
G) 0 bis 30 Gew.-% von mindestens einem Schlagzähmodifikator; und
H) 0 bis 40 Gew.-% von mindestens einem Hilfsstoff; wobei die Summe der Gew.-% der Komponenten der Zusammensetzung 100 Gew.-% beträgt.

2. Zusammensetzung nach Anspruch 1, wobei das mindestens eine Polyamid von Komponente B) ausgewählt ist aus der Gruppe bestehend aus PA 9T, PA 4T, PA 6T6I und PA 6T66.

3. Zusammensetzung nach Anspruch 1 oder 2, wobei das Aluminiumphosphinat Aluminiumdiethylphosphinat ist.

4. Zusammensetzung nach einem der Ansprüche 1 bis 3, wobei das mindestens eine Säureabfangmittel D) ausgewählt ist aus Metallsalzen von Phosphonsäure, Metallsalzen von Halbestern von Phosphonsäure und Stannaten.

5. Zusammensetzung nach einem der Ansprüche 1 bis 4, wobei das Säureabfangmittel D) Zinkstannat ist.

6. Zusammensetzung nach einem der Ansprüche 1 bis 5, umfassend 20 bis 75 Gew.-% von Komponente A).

7. Zusammensetzung nach einem der Ansprüche 1 bis 6, umfassend 12,5 bis 40 Gew.-% von Komponente B).

8. Zusammensetzung nach einem der Ansprüche 1 bis 7, umfassend 4 bis 12,5 Gew.% von Komponente C).

9. Zusammensetzung nach einem der Ansprüche 1 bis 8, umfassend 0,05 bis 1,5 Gew.-% von Komponente D).

10. Zusammensetzung nach einem der Ansprüche 1 bis 9, umfassend 5 bis 50 Gew.-% von Komponente F).

11. Verwendung einer Zusammensetzung nach einem der Ansprüche 1 bis 10 zur Fertigung einer Faser, eines Films, Schaums oder Formartikels.

12. Verwendung nach Anspruch 11, wobei die Faser, der Film, Schaum oder Formartikel eine elektrische oder elektronische Komponente ist.

13. Faser, Film oder Formartikel, umfassend die Zusammensetzung nach einem der Ansprüche 1 bis 10.

14. Faser, Film, Schaum oder Formartikel nach Anspruch 13, wobei es sich um eine elektrische oder elektronische Komponente handelt.

## Revendications

1. Composition comprenant
A) 20 à 80 % en poids d'au moins une polyarylène (éther) sulfone contenant au plus 0,05 % en poids de groupes terminaux phénoliques ;
(B) 10 à 50 % en poids d'au moins un polyamide semi-aromatique ;
C) 4 à 15 % en poids d'au moins un phosphinate d'aluminium ;
D) 0,01 à 2 % en poids d'au moins un piégeur d'acide ;
E) 0 à 10 % en poids d'au moins un agent de compatibilité ;
F) 0 à 60 % en poids d'au moins une charge fibreuse et/ou particulaire ;
G) 0 à 30 % en poids d'au moins un modificateur de résistance aux chocs ; et
H) 0 à 40 % en poids d'au moins un adjuvant ;
la somme des % en poids des composants de la composition étant de 100 % en poids.

2. Composition selon la revendication 1, dans laquelle le ou les polyamides du composant B) sont choisis dans le groupe constitué par PA 9T, PA 4T, PA 6T6I et PA 6T66.

3. Composition selon la revendication 1 ou 2, dans laquelle le phosphinate d'aluminium est le diéthylphosphinate d'aluminium.

4. Composition selon l'une quelconque des revendications 1 à 3, dans laquelle le ou les piégeurs d'acide D) sont choisis parmi les sels métalliques d'acide phosphonique, les sels métalliques de semi-esters d'acide phosphonique et les stannates.

5. Composition selon l'une quelconque des revendications 1 à 4, dans laquelle le piégeur d'acide D) est le stannate de zinc.

6. Composition selon l'une quelconque des revendications 1 à 5, comprenant 20 à 75 % en poids de composant A) .

7. Composition selon l'une quelconque des revendications 1 à 6, comprenant 12,5 à 40 % en poids de composant B).

8. Composition selon l'une quelconque des revendications 1 à 7, comprenant 4 à 12,5 % en poids de composant C) .

9. Composition selon l'une quelconque des revendications 1 à 8, comprenant 0,05 à 1,5 % en poids de composant D) .

10. Composition selon l'une quelconque des revendications 1 à 9, comprenant 5 à 50 % en poids de composant F).

11. Utilisation de la composition selon l'une quelconque des revendications 1 à 10 pour la fabrication d'une fibre, d'un film, d'une mousse ou d'un article façonné.

12. Utilisation selon la revendication 11, dans laquelle la fibre, le film, la mousse ou l'article façonné est un composant électrique ou électronique.

13. Fibre, film ou article façonné comprenant la composition selon l'une quelconque des revendications 1 à 10.

14. Fibre, film, mousse ou article façonné selon la revendication 13, celui-ci étant un composant électrique ou électronique.
